(19) Europäisches Patentamt
European Patent Office
Office européen des brevets

(11) **EP 4 356 602 B1**

(12) **EUROPÄISCHE PATENTSCHRIFT**

(45) Veröffentlichungstag und Bekanntmachung des Hinweises auf die Patenterteilung:
**16.04.2025 Patentblatt 2025/16**

(21) Anmeldenummer: **22735788.6**

(22) Anmeldetag: **10.06.2022**

(51) Internationale Patentklassifikation (IPC):
**H04N 25/711** *(2023.01)* **H04N 25/71** *(2023.01)*

(52) Gemeinsame Patentklassifikation (CPC):
**H04N 25/711; H04N 25/745**

(86) Internationale Anmeldenummer:
**PCT/EP2022/065810**

(87) Internationale Veröffentlichungsnummer:
**WO 2022/263311 (22.12.2022 Gazette 2022/51)**

(54) **TDI-ZEILENSENSOR UND VERFAHREN ZUM BETREIBEN EINES TDI-ZEILENSENSORS**

TDI LINE SENSOR AND METHOD FOR OPERATING A TDI LINE SENSOR

CAPTEUR DE LIGNE TDI ET PROCÉDÉ DE FONCTIONNEMENT D'UN CAPTEUR DE LIGNE TDI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2021 DE 102021206280**

(43) Veröffentlichungstag der Anmeldung:
**24.04.2024 Patentblatt 2024/17**

(73) Patentinhaber: **Deutsches Zentrum für Luft- und Raumfahrt e.V.**
**53227 Bonn (DE)**

(72) Erfinder:
• **KRUTZ, David**
**53227 Bonn (DE)**
• **MANTHEY, Kristian**
**53227 Bonn (DE)**

(74) Vertreter: **Zucker, Volker**
**Patentanwälte Bressel und Partner mbB**
**Potsdamer Platz 10**
**10785 Berlin (DE)**

(56) Entgegenhaltungen:
**US-A1- 2007 064 135    US-A1- 2007 064 135**

**Beschreibung**

Die Erfindung betrifft einen TDI-Zeilensensor und ein Verfahren zum Betreiben eines TDI-Zeilensensors.

Insbesondere im Bereich der hochauflösenden Satellitenfernerkundung stellen TDI-CCD-Sensoren die derzeit beste Technologie dar, um den Anforderungen der geringen Bodenauflösung, der hohen Scangeschwindigkeit und dem hohen Signal-zu-Rausch-Verhalten gerecht zu werden. Ein wichtiger Aspekt stellt dabei die Time-Delay-Integration (TDI) dar, d.h. das synchrone Weiterschieben der Ladungen innerhalb der CCD, um die Bewegung des Satelliten zu kompensieren. Bisher wurden TDI-CCD-Sensoren in NMOS-Technologie umgesetzt, wobei neuartige Ansätze in CMOS-Technologie neue Möglichkeiten in der Integrationsdichte und der Funktionalität des Sensors erlauben. Der Sensor wird dabei durch CCD-Ansteuerungssignale angesteuert. Zu den CCD-Ansteuerungssignalen gehören unter anderem: Schiebetakte für den TDI-Ladungstransport sowie Takte für die CCD-Auslesung (Reset, Transfer-Gate, Summing-Well). Diese Signale werden in einer digitalen Einheit, welche mit einer Systemperiode läuft, erzeugt. Die CCD-Ansteuerungssignale weisen dabei eine Periodizität auf, wodurch kontinuierliche Zeilen aufgenommen werden können. Die Periodenlänge liegt dabei üblicherweise im μs-Bereich, wohingegen die Systemperiode, abgeleitet aus der Taktfrequenz des Systems (Systemfrequenz), im 10 ns-Bereich liegt. Die Periode der CCD-Ansteuerungssignale ist dabei ein Vielfaches der Systemperiode. Die synchrone Bewegung wird dabei durch Anpassung der Periode der CCD-Ansteuerungssignale gewährleistet. Verändert sich die Relativgeschwindigkeit, beispielsweise weil der Satellit seine Umlaufbahn wechselt, so wird das Ansteuerungssignal nachgeführt, d.h. seine Periode verändert. Die Flanke bzw. Flankensteilheit wird dabei durch eine elektrische Schaltung (z.B. ein RC-Filter) starr definiert.

Aus der US 2007/064135 A1 ist ein TDI-Zeilensensor bekannt, wobei der TDI-Zeilensensor n TDI-Zeilen, mindestens eine Ausleseelektronik und eine Schaltungsanordnung zur Erzeugung von CCD-Ansteuerungssignalen für die TDI-Zeilen aufweist, wobei die Periode der CCD-Ansteuerungssignale ein ganzzahliges Vielfaches einer Systemperiode ist, wobei alle TDI-Zeilen mit dem gleichen CCD-Ansteuerungssignal angesteuert werden.

Der Erfindung liegt das technische Problem zugrunde, einen verbesserten TDI-Zeilensensor zu schaffen sowie ein entsprechendes Verfahren zum Betreiben eines TDI-Zeilensensors zur Verfügung zu stellen.

Die Lösung des technischen Problems ergibt sich durch einen TDI-Zeilensensor mit den Merkmalen des Anspruchs 1 sowie ein Verfahren mit den Merkmalen des Anspruchs 7.

Weitere vorteilhafte Ausgestaltungen der Erfindung ergeben sich aus den Unteransprüchen.

Hierzu weist der TDI-Zeilensensor n TDI-Zeilen, mindestens eine Ausleseelektronik und eine Schaltungsanordnung zur Erzeugung von CCD-Ansteuerungssignalen für die TDI-Zeilen auf, wobei die Periode der CCD-Ansteuerungssignale ganzzahlige Vielfache der Systemperiode sind. Dabei werden alle TDI-Zeilen zeitgleich mit dem gleichen CCD-Ansteuerungssignal angesteuert. Der TDI-Zeilensensor ist derart ausgebildet, dass anhand der Relativgeschwindigkeit zu einem zu beobachteten Objekt eine optimale Periode der CCD-Ansteuerungssignale berechnet wird, wobei die optimale Periode kein ganzzahliges Vielfaches der Systemperiode ist, wobei die Periode der CCD-Ansteuerungssignale als ganzzahlige Vielfache der Systemperiode während der Integration über alle n TDI-Zeilen derart verändert wird, sodass das arithmetische Mittel der Periode der CCD-Ansteuerungssignale über die n Integrationsschritte der optimalen Periode entspricht, wobei die Veränderung der Periode der CCD-Ansteuerungssignale über die n Integrationsschritte auf eine Systemperiode begrenzt ist. Hierdurch wird die erreichbare Bildqualität insbesondere bei vielen TDI-Zeilen und bei kleinen Perioden signifikant verbessert.

In einer Ausführungsform ist der TDI-Zeilensensor derart ausgebildet, ein Periodenmuster über x Integrationsschritte zu berechnen, wobei der arithmetische Mittelwert über die x Integrationsschritte der optimalen Periode entspricht, wobei das Periodenmuster über die n Integrationsschritte wiederholt angewendet wird. Dabei gilt x ≤ n. Ergibt beispielsweise die Berechnung der optimalen Periode, dass diese 1.000,25 Taktlängen der Systemperiode sein müsste, so wird beispielsweise dreimal ein CCD-Ansteuerungssignal mit 1.000 Taktlängen der Systemperiode und anschließend ein CCD-Ansteuerungssignal mit 1.001 Taktlängen der Systemperiode erzeugt. X ist in diesem Fall 4. Dieses Muster wird dann wiederholt. Bei 256 TDI-Zeilen entsprechend 64 mal.

In einer weiteren Ausführungsform ist die Schaltungsanordnung derart ausgebildet, zusätzlich eine Flankensteilheit der CCD-Ansteuerungssignale zu verändern, wobei bei zunehmender Periode die Flankensteilheit reduziert wird. Hierdurch wird die Bildqualität weiter verbessert, da kontrastreichere Teilbilder erzeugt werden.

Dabei kann die Anpassung der Flankensteilheit auch bei TDI-Sensoren aus dem Stand der Technik zur Anwendung kommen, bei denen die Periode der CCD-Ansteuerungssignale über die n Integrationsschritte konstant ist, sich aber die jeweilige Periode in Abhängigkeit der Relativgeschwindigkeit ändert.

In einer Ausführungsform ist die Schaltungsanordnung derart ausgebildet, lineare Flanken (Rampen) zu erzeugen, was weitere Vorteile im Vergleich zu den exponentiellen Flanken (aufgrund der RC-Glieder) aus dem Stand der Technik hat, insbesondere was die Nachführung der Flankensteilheit betrifft.

In einer Ausführungsform ist die Schaltungsanordnung als FPGA oder ASIC ausgebildet, sodass die Nachführung sehr schnell ist. Die Berechnung der CCD-Ansteuerungssignale erfolgt also in reiner Hardware ohne Mikroprozessor.

In einer weiteren Ausführungsform ist am Ausgang der Schaltungsanordnung ein Digital-Analog-Wandler angeordnet. Dabei kann der Digital-Analog-Wandler als separates Bauteil ausgebildet sein oder aber im FPGA bzw. ASIC integriert sein.

Die Erfindung wird nachfolgend anhand eines bevorzugten Ausführungsbeispiels näher erläutert. Die Figuren zeigen:

Fig. 1     ein stark vereinfachtes Blockschaltbild eines TDI-Zeilensensors,

Fig. 2a     einen Verlauf eines Ansteuerungssignals für eine erste Relativgeschwindigkeit (Stand der Technik),

Fig. 2b     einen Verlauf eines Ansteuerungssignals für eine zweite Relativgeschwindigkeit (Stand der Technik),

Fig. 3a     einen Verlauf eines erfindungsgemäßen Ansteuerungssignals für eine erste Relativgeschwindigkeit,

Fig. 3b     einen Verlauf eines erfindungsgemäßen Ansteuerungssignals für eine zweite Relativgeschwindigkeit,

Fig. 4     eine Detaildarstellung eines Teils eines Ansteuerungssignals,

Fig. 5     eine Detaildarstellung eines Teils eines Ansteuerungssignals bei einer geänderten Relativgeschwindigkeit und

Fig. 6     eine schematische Darstellung einer Schaltungsanordnung zur Erzeugung der Ansteuerungssignale.

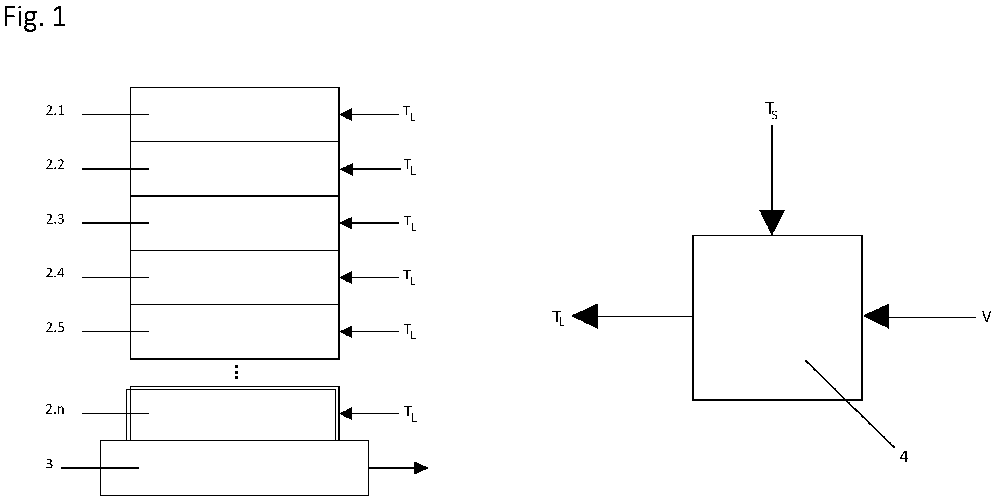

In der Fig. 1 ist stark vereinfacht ein Blockschaltbild eines TDI-Zeilensensors 1 dargestellt, der n TDI-Zeilen 2.1-2.n, mindestens eine Ausleseelektronik 3 und eine Schaltungsanordnung 4 zur Erzeugung von CCD-Ansteuerungssignalen $T_L$ (nachfolgend nur noch kurz Ansteuerungssignale) für die n TDI-Zeilen 2.1-2.n aufweist, wobei die Schaltungsanordnung 4 mit einer Systemfrequenz $f_S$ bzw. Systemperiode Ts betrieben wird und eine Relativgeschwindigkeit V als Eingangsgröße erhält.

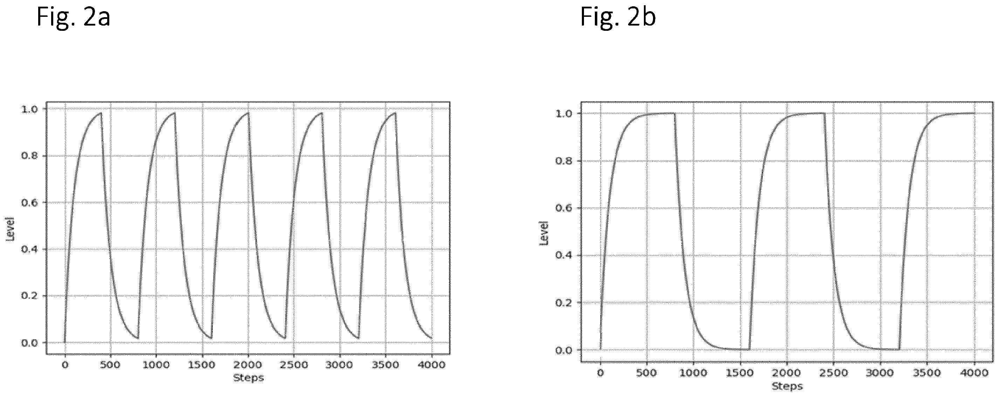

Bevor die Erfindung näher erläutert werden soll, soll zunächst der Stand der Technik anhand der Fig. 2a und 2b kurz erläutert werden. Dabei ist in Fig. 2a ein Ansteuerungssignal für eine erste Relativgeschwindigkeit dargestellt, wobei die auf der x-Achse aufgetragenen *Steps* Taktlängen der Systemperiode Ts darstellen. Dabei steigen und fallen die Flanken des Ansteuerungssignal exponentiell (aufgrund der RC-Filter). In der Fig. 2b ist das Ansteuerungssignal für eine zweite Relativgeschwindigkeit dargestellt, die kleiner als die erste Relativgeschwindigkeit ist, sodass die Periode des Ansteuerungssignal länger ist, wobei jedoch die Steilheit der Flanken gleichbleibt.

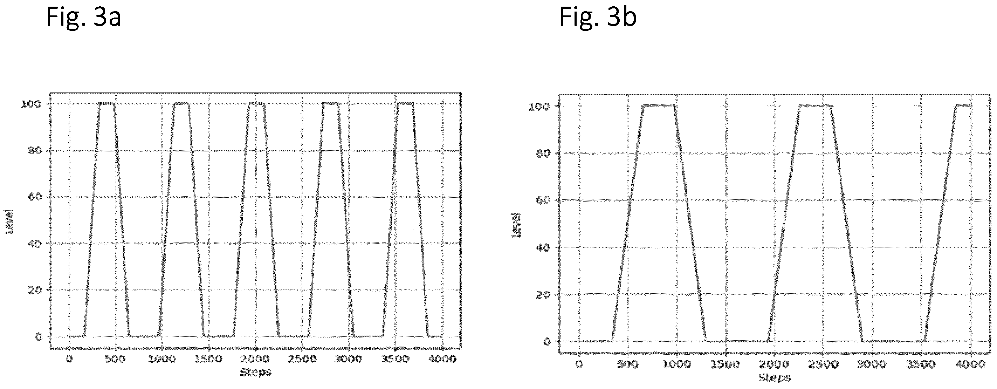

In der Fig. 3a und 3b sind die Ansteuerungssignale in einer erfindungsgemäßen Ausführungsform dargestellt, wobei einerseits die Flanken linear steigen und fallen und andererseits die Flanken bei längeren Perioden der Ansteuerungssignale weniger steil ansteigen bzw. fallen.

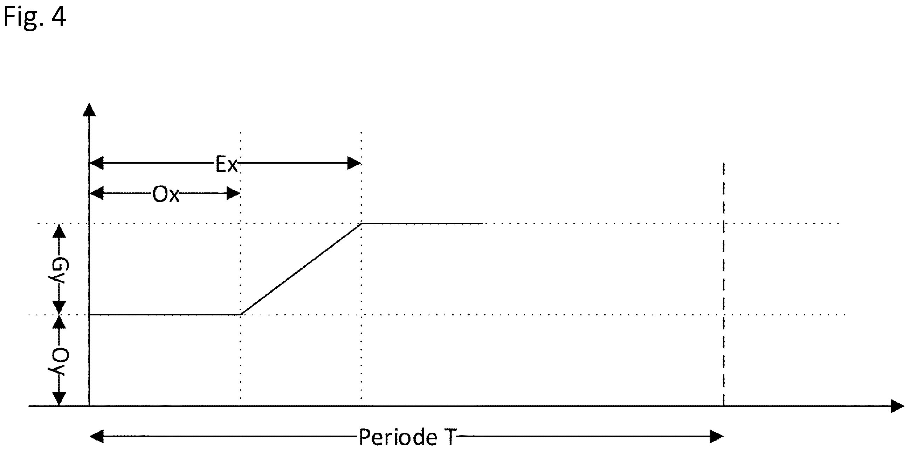

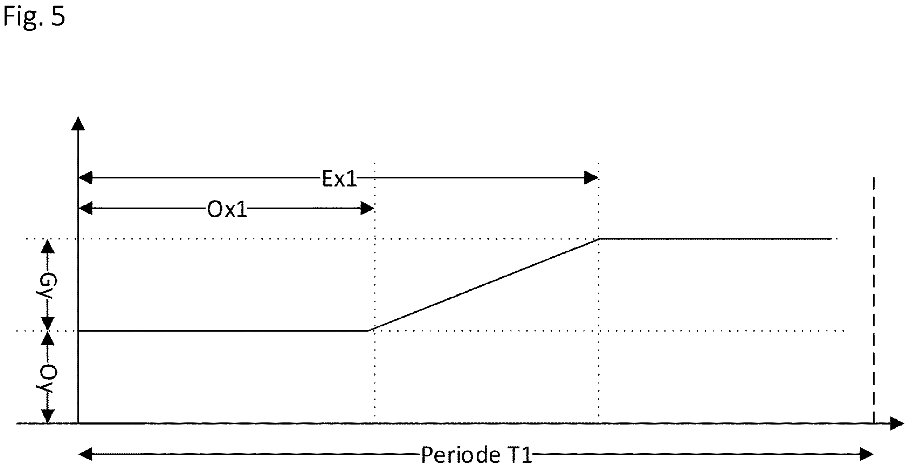

Dabei soll ein in der Schaltungsanordnung implementierter Algorithmus die Kurvenform in Abhängigkeit der Periode T des Ansteuerungssignals selbst erzeugen, was nun anhand der Fig. 4 und 5 erläutert wird. Bei einer Veränderung der Periode von T zu T1 sollen sich Ox und Ex entsprechend anpassen. Die Periode T gibt die Länge in Takten der Systemperiode Ts wieder. Diese Periode T muss nicht ganzzahlig sein. Eine Festkommadarstellung ist erlaubt, was ein digitales Jitter erzeugt, welches im Kontext der De-Synchronisation die Leistungsfähigkeit des Systems stark verbessert, was später noch näher erläutert wird. Oy ist das Start-Level in Digital Number (DN). Gy ist die Änderung des Levels über die Rampenlaufzeit in DN. Ox gibt den Startpunkt der Rampe über die Periode wieder. Da sich die Periode ändern kann, muss hier ein relatives Maß definiert sein. Ox soll dabei eine Festkommadarstellung besitzen mit Werten in [0,1]. Der Startzeitpunkt ist dann das Produkt aus der Periode und diesem Wert. $E_X$ definiert den Endzeitpunkt der Rampe. Ebenso wie Ox ist dieser Wert relativ zu der Periode definiert, d.h. der Wert muss aus [0,1] sein. Dabei gilt

$$Ex1 = \frac{T_1}{T} \cdot Ex \quad \text{sowie} \quad Ox1 = \frac{T_1}{T} \cdot Ox.$$

Die Zeitachse ist dabei in diskreten Einheiten, den Takten, der Systemperiode Ts eingeteilt. Hier wird nur der Fall einer steigenden Rampe diskutiert, die nachfolgende fallende Flanke wird durch den gleichen Algorithmus, aber mit angepassten Parametern abgedeckt.

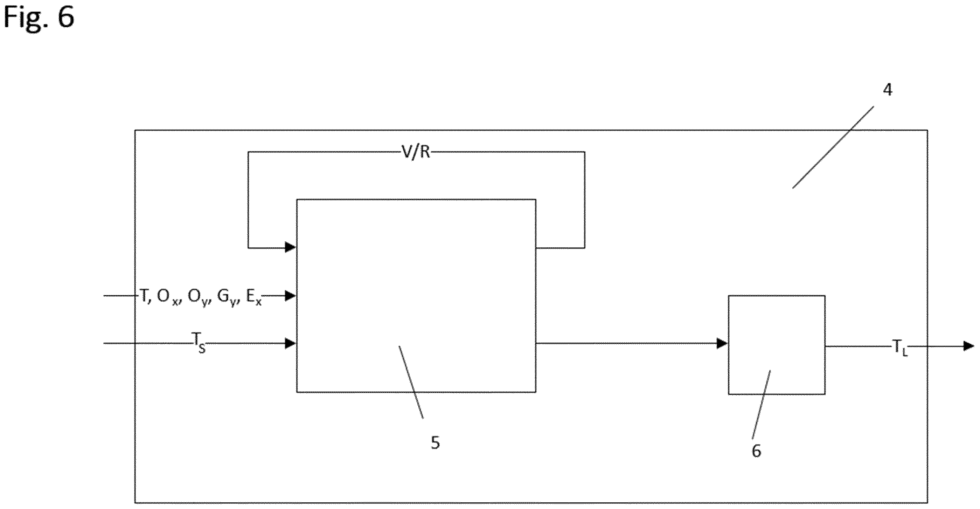

Der Algorithmus zeichnet sich durch eine besonders gute Implementierbarkeit in Hardware-Strukturen, wie z.B. FPGA oder ASIC aus. Der grundsätzliche Aufbau ist in Fig. 6 dargestellt. Pro Takteinheit muss hier ein neuer Ausgabewert, der Rampenwert berechnet werden. Aufgrund der hohen Geschwindigkeit und der Umsetzung in Hardware wird in diesem Algorithmus auf die Benutzung von echten Multiplikationen verzichtet. Diese würden viel Platz, d.h. Fläche im FPGA oder ASIC, benötigen, als auch die Geschwindigkeit reduzieren. Multiplikation und ganzzahlige Division mit 2-Potenzen sind erlaubt, da diese in Hardware aufgrund der Binärdarstellung keine Operationen darstellen, d.h. gänzlich ohne zusätzlichen Aufwand implementiert werden können.

Periode T, Level Oy, Level-Änderung Gy, Oy und Ex stellen die fünf Initialisierungswerte dar.

Aus dieses 5 Werten werden folgende digitale Integer-Hardwarerepräsentationen abgeleitet. Dabei müssen zwei Basen definiert sein: Period_Basis und Point_Basis. Diese definieren die Genauigkeit der Darstellung der Rampe. Im Gegensatz zu den Initialisierungsparametern, welche zur Laufzeit geändert werden können, sind die Basen zur Laufzeit nicht veränderbar. Diese sind durch die Hardware fest definiert. Die Berechnung dieser Werte beinhaltet auch Multiplikationen bzw. Division, was jedoch akzeptabel ist, da diese Werte nur für die Konfiguration berechnet werden müssen. Die Berechnung selber kann auf einen Prozessor durchgeführt werden, welcher der CCD Ansteuerung vorgelagert ist.

- Period_N = Period * 2^ Period_Basis
- StartPoint_N = 2^ Point_Basis /Ox
- StopPoint_N = 2^ Point_Basis /StopPoint
- Level_N = 2^ Point_Basis * Gy/(Ex-Ox)

Zusätzlich werden folgende Variablen benötigt:

| Variable | Bemerkung | Init-Wert |
|---|---|---|
| State | definiert den aktuellen Zustand (0, 1, 2) | 0 |
| Level | definiert den aktuellen Ausgabewert | 0 |
| ErrorPeriod | Restfehler in der Periode | 0 |
| ErrorStart | Restfehler beim Startpunkt | 0 |
| ErrorStop | Restfehler beim Endpunkt | 0 |
| ErrorLevel | Restfehler im Level | 0 |

Der Ausgabewert Level wird nun durch folgenden Algorithmus pro Takt berechnet

```
ErrorPeriod += 2**Period_Basis
ErrorStart += StartPoint_N*2**Period_Basis
ErrorStop += StopPoint_N*2**Period_Basis
ErrorLevel += Level_N*2**Point_Basis
if state == 0:
 level = Oy
 if ErrorStart > Period_N*2**Point_Basis:
   ErrorLevel = 0
   state = 1
if state == 0 or state == 1:
 if ErrorStop > Period_N*2**Point_Basis:
   state = 2
   ErrorStop = 0
if state == 1:
 if ErrorLevel > Period_N*2**Period_Basis:
   ErrorLevel -= Period_N*2**Period_Basis
   level += 1
if state == 2:
 level = Oy+Gy
if ErrorPeriod > Period_N:
 ErrorPeriod -= Period_N
 state = 0
 ErrorStart = 0
 ErrorStop = 0
 ErrorLevel = 0
 level = Oy
```

Der Algorithmus funktioniert nur, wenn die Rampe nicht steiler als 45° ist, d.h. Ex-Ox > Gy ist. Wenn dies durch die Applikation nicht erfüllt werden kann, kann man die Rampe auch durch eine zusätzliche Skalierung S dazu bringen, dass die obige Ungleichung immer erfüllt ist: Gy -> Gy/S.

Der Algorithmus lässt sich auch für die reine Erzeugung digitaler Level, d.h. 0, 1 benutzen. Dann ist Gy nur 1, und die Rampe wechselt schlagartig von 0 nach 1 bzw. umgekehrt.

In der Fig. 6 ist die Schaltungsanordnung 4 dargestellt, wobei die Schaltungsanordnung 4 einen Baustein 5 zur Umsetzung des Algorithmus und einen Digital-Analog-Wandler 6 aufweist, an dessen Ausgang die Ansteuerungssignale

$T_L$ für die TDI-Zeilen 2.1-2.n (siehe Fig. 1) anliegen. Dabei werden die Variablen und Registerwerte V/R vom Ausgang des Bausteins 5 zum Eingang zurückgekoppelt. Als weitere Eingangswerte erhält der Baustein die fünf Initialwerte sowie die Systemfrequenz $f_S$ (System-Clock mit Systemperiode $T_S$) sowie gegebenenfalls ein Reset-Signal.

Abschließend soll die Auswirkung des digitalen Jitters bei der Periode bzw. dem Ansteuerungstakt erläutert werden.

Im Falle einer gleichförmigen Verschmierung ist die Degradierungs-MTF definiert durch:

$$\mathrm{MTF(k)} = sinc(\pi k \Delta x)$$

Mit $\Delta x$ den Versatz der Aufnahme. Wenn $\Delta x = 0$ findet keine Desynchronisation statt und die MTF ist frequenzunabhängig gleich 1. Im Falle das $\Delta x = g$ mit g der Ground Sampling Distance ist, ergibt sich bei der Nyquist-Frequenz von

$$k_n = \frac{1}{2g}$$

$$\mathrm{MTF}(k_n) = sinc(\pi k_n g)$$

$$= sinc\left(\frac{\pi}{2}\right) = \frac{2}{\pi} \approx 63.7\%$$

Diese ist die bekannte Degradierung bei nicht-TDI Sensoren im Fernerkundungsbereich.

Im Falle einer Fokalebene ist die Integrationszeit durch die interne Taktgenerierung in der Auflösung beschränkt. Es werden Takte in der Größenordnung von 10ns bis 40ns erwartet. Damit ist die Genauigkeit der CCD-Ansteuerungssignale dadurch beschränkt.

Allgemein gilt für den Fall von einer gleichförmigen Geschwindigkeitsabweichung bei TDI-Sensoren:

$$\mathrm{MTF(k)} = sinc(\pi k (v - v_D)T)$$

Mit T der echten Integrationszeit, d.h. die Anzahl der TDI-Stufen multipliziert mit der "echten" Zeilenperiode $T_L$, sowie der Objektgeschwindigkeit v und der TDI Geschwindigkeit $v_D$. Die Zeilenperiode entspricht dabei der im Vorhinein diskutieren Periode der Ansteuerungssignale.

$$\mathrm{MTF(k)} = sinc(\pi k (v - v_D)N\,T_L)$$

Die Geschwindigkeiten kann man jetzt ausdrücken durch die Zeilenperiode (alles in der Detektorebene):

$$\mathrm{MTF(k)} = sinc(\pi k p \left(\frac{1}{T_L} - \frac{1}{T_D}\right) N\,T_L)$$

$$\mathrm{MTF(k)} = sinc(\pi k p \left(1 - \frac{T_L}{T_D}\right) N\,)$$

Mit p dem Pixel Pitch und $T_D$ der einstellbaren Zeilenperiode. Aufgrund der Einschränkung der Genauigkeit der Zeilenperiode, wird sich die Differenz in den meisten Fälle nicht aufheben. Die "echte" Zeilenperiode $T_L$ kann durch die Zeilenperiode und einen Korrekturterm ausgedrückt werden:

$$T_L = T_D - \epsilon$$

Wobei $\varepsilon$ im Bereich der Taktperiode der FPA liegt. Mit dieser Änderung ergibt sich:

$$\mathrm{MTF(k)} = sinc(\pi k p N\,\frac{\epsilon}{T_D})$$

Damit die Desynchronisation nicht signifikant wirkt, sollte der Sinc-Term nicht größer als 0.1 (TBC) sein. Damit ergibt sich für $\varepsilon$:

$$\frac{\epsilon}{T_D} < 0.1 \frac{2}{\pi N}$$

Bei N=256, der maximalen TDI Stufen, wäre die Grenze bei 2,5E-4. Zusammen mit der maximalen Zeilenfrequenz von z.B. 150kHz, d.h. eine Zeilenperiode von 6.6$\mu$s, ergibt das eine Genauigkeit von kleiner 1.6ns. Das ist technisch im FPGA nicht machbar.

Deshalb wird ein Verfahren vorgeschlagen, in welchem die Zeilenperiode $T_D$ nicht fest ist. Vielmehr variiert man von Takt zu Takt die Periode, damit der Gesamtfehler $\varepsilon$ immer kleiner als eine Systemperiode bleibt. In einem vereinfachten Modell kann man annehmen, dass der Versatz $\Delta x$ sich aus vielen, nicht unbedingt identischen, Versätzen der einzelnen Takte zusammensetzte. Damit ergibt sich:

$$\mathrm{MTF(k)} = sinc(\pi k \Delta x)$$

$$\mathrm{MTF(k)} = sinc(\pi k (\Delta x_0 + .. + \Delta x_k))$$

$$\mathrm{MTF(k)} = sinc(\pi k ((v - v_{D0}) + \cdots + (v - v_{Dk})) T_L)$$

$$\mathrm{MTF(k)} = sinc(\pi k (Nv - (v_{D0} + \cdots + v_{Dk})) T_L)$$

$$\mathrm{MTF(k)} = sinc(\pi k \left( Nv - p(\frac{1}{T_{D0}} + \cdots + \frac{1}{T_{Dk}}) \right) T_L)$$

Die Verteilung der $T_D$ erfolgt nun so, dass diese im Mittel über die N TDI Stufen eine möglichst geringe Abweichung zur geforderten Zeilenperiode haben. Trotzdem bleibt ein Restfehler von $\frac{\epsilon}{N}$. Damit ergibt sich für die MTF:

$$\mathrm{MTF(k)} = sinc(\pi k \left( Nv - p(\frac{1}{T_L + \epsilon_1} + \cdots + \frac{1}{T_L + \epsilon_k}) \right) T_L)$$

Da $\varepsilon$ klein gegenüber $T_L$ ist, kann man das Ergebnis annähern durch:

$$\mathrm{MTF(k)} = sinc(\pi k \left( Nv - \frac{p}{T_L}(1 - \frac{\epsilon_1}{T_L} + \cdots + 1 - \frac{\epsilon_k}{T_L}) \right) T_L)$$

$$\mathrm{MTF(k)} = sinc(\pi k p \left( N - N - \frac{\epsilon_1}{T_L} - \cdots - \frac{\epsilon_k}{T_L} \right))$$

$$\mathrm{MTF(k)} = sinc(\pi k p N \frac{1}{T_L} < \epsilon >)$$

Wie oben bereits beschrieben liegt der Restfehler von $< \varepsilon >$ bei $\frac{\epsilon}{N}$. Damit ergibt sich:

$$\mathrm{MTF(k)} = sinc(\pi k p \frac{1}{T_L} \epsilon)$$

Damit die Desynchronisation nicht signifikant wirkt, sollte der sinc-Term nicht größer als 0.1 sein. Damit ergibt

sich für $\varepsilon$:

$$\frac{\epsilon}{T_L} < 0.1\frac{2}{\pi}$$

Unabhängig von der TDI Stufe ergibt sich bei einer maximalen Zeilenfrequenz von 150kHz, d.h. eine Zeilenperiode von 6.6μs eine Genauigkeit von besser 420ns. Diese ist technologisch ohne Probleme realisierbar. Mit einer akzeptablen MTF-Degradierung von 1%, würde dieser Wert auf 42ns fallen, was aber immer noch im FPGA realisiert werden kann.

Die Auflösung der Zeilenperiode wird mit diesem Ansatz nicht mehr in Vielfachen der Systemperiode Ts angegeben, sondern durch die Systemperiode Ts dividiert durch die TDI Stufen. Dadurch wird erreicht, dass $< T_L >$ mit der gewünschten Genauigkeit eingestellt werden kann.

Beispiel

TDI Stufen=256 bei 100MHz (10ns). Damit ist die mittlere Zeilenperiode mit einer Genauigkeit von 39ps einstellbar. Die Integrationszeit hat damit wie erwartet einen Fehler von 10ns bei TDI-256.

Wenn bei diesem System jetzt weniger TDI Stufen eingestellt werden, bleibt der Restfehler jedoch bei 10ns. Er lässt sich nicht weiter reduzieren, weil es die kleinste physikalische Auflösung ist. Man kann zwar eine bessere Genauigkeit einstellen, die Mittelung läuft jedoch nur über die Anzahl der TDI Stufen, so dass dies kein Mehrgewinn an Genauigkeit ergeben würde.

Im schlimmsten Fall, TDI=1, würde die höhere Genauigkeit komplett verloren gehen. Der Restfehler über die Integrationszeit wäre wieder 10ns.

## Patentansprüche

1. TDI-Zeilensensor (1), wobei der TDI-Zeilensensor (1) n TDI-Zeilen (2.1-2.n), mindestens eine Ausleseelektronik (3) und eine Schaltungsanordnung (4) zur Erzeugung von CCD-Ansteuerungssignalen ($T_L$) für die TDI-Zeilen (2.1-2.n) aufweist, wobei die Periode der CCD-Ansteuerungssignale ($T_L$) ein ganzzahliges Vielfaches einer Systemperiode ($T_S$) ist, wobei alle TDI-Zeilen (2.1-2.n) mit dem gleichen CCD-Ansteuerungssignal ($T_L$) angesteuert werden, **dadurch gekennzeichnet, dass** der TDI-Zeilensensor (1) derart ausgebildet ist, dass anhand der Relativgeschwindigkeit (V) eine optimale Periode der CCD-Ansteuerungssignale ($T_L$) berechnet wird, wobei die optimale Periode kein ganzzahliges Vielfaches der Systemperiode ist, wobei die Periode der CCD-Ansteuerungssignale ($T_L$) als ganzzahlige Vielfache der Systemperiode ($T_S$) während der Integration über alle n TDI-Zeilen (2.1-2.n) derart verändert wird, sodass das arithmetische Mittel der Periode der CCD-Ansteuerungssignale ($T_L$) über die n Integrationsschritte der optimalen Periode entspricht, wobei die Veränderung der Periode der CCD-Ansteuerungssignale über die n Integrationsschritte auf eine Systemperiode ($T_S$) begrenzt ist.

2. TDI-Zeilensensor (1) nach Anspruch 1, wobei der TDI-Zeilensensor (1) derart ausgebildet ist, ein Periodenmuster über x Integrationsschritte zu berechnen, wobei der arithmetische Mittelwert über die x Integrationsschritte der optimalen Periode entspricht, wobei das Periodenmuster über die n Integrationsschritte wiederholt angewendet wird.

3. TDI-Zeilensensor (1) nach Anspruch 1 oder 2, wobei die Schaltungsanordnung (4) derart ausgebildet ist, zusätzlich eine Flankensteilheit der CCD-Ansteuerungssignale ($T_L$) zu verändern, wobei bei zunehmender Periode der CCD-Ansteuerungssignale ($T_L$) die Flankensteilheit reduziert wird.

4. TDI-Zeilensensor (1) nach einem der vorangegangenen Ansprüche, wobei die Schaltungsanordnung (4) derart ausgebildet ist, CCD-Ansteuerungssignale ($T_L$) mit linearen Flanken zu erzeugen.

5. TDI-Zeilensensor (1) nach einem der vorangegangenen Ansprüche, wobei die Schaltungsanordnung (4) als FPGA der als ASIC ausgebildet ist.

6. TDI-Zeilensensor (1) nach einem der vorangegangenen Ansprüche, wobei am Ausgang der Schaltungsanordnung (4) ein Digital-Analog-Wandler (6) angeordnet ist.

7.  Verfahren zum Betreiben eines TDI-Zeilensensors (1), wobei der TDI-Zeilensensor (1) n TDI-Zeilen (2.1-2.n), mindestens eine Ausleseelektronik (3) und eine Schaltungsanordnung (4) zur Erzeugung von CCD-Ansteuerungssignalen ($T_L$) für die TDI-Zeilen (2.1-2.n) aufweist, wobei die Periode der CCD-Ansteuerungssignale ($T_L$) ein ganzzahliges Vielfaches einer Systemperiode ($T_S$) ist, wobei alle TDI-Zeilen (2.1-2.n) mit dem gleichen CCD-Ansteuerungssignal ($T_L$) angesteuert werden, **dadurch gekennzeichnet, dass** der TDI-Zeilensensor (1) anhand der Relativgeschwindigkeit (V) eine optimale Periode der CCD-Ansteuerungssignale ($T_L$) berechnet, wobei die optimale Periode kein ganzzahliges Vielfaches der Systemperiode ($T_S$) ist, wobei die Periode der CCD-Ansteuerungssignale ($T_L$) als ganzzahlige Vielfache der Systemperiode ($T_S$) während der Integration über alle n TDI-Zeilen (2.1-2.n) derart verändert wird, sodass das arithmetische Mittel der Periode der CCD-Ansteuerungssignale über die n Integrationsschritte der optimalen Periode entspricht, wobei die Veränderung der Periode der CCD-Ansteuerungssignale über die n Interpretationsschritte auf eine Systemperiode ($T_S$) begrenzt ist.

8.  Verfahren nach Anspruch 7, wobei der TDI-Zeilensensor (1) ein Periodenmuster über x Integrationsschritte berechnet, wobei der arithmetische Mittelwert über die x Integrationsschritte der optimalen Periode entspricht, wobei das Periodenmuster über die n Integrationsschritte wiederholt angewendet wird.

9.  Verfahren nach Anspruch 7 oder 8, wobei zusätzlich die Schaltungsanordnung (4) eine Flankensteilheit der CCD-Ansteuerungssignale ($T_L$) verändert, wobei bei zunehmender Periode der CCD-Ansteuerungssignale ($T_L$) die Flankensteilheit reduziert wird.

10. Verfahren nach einem der Ansprüche 7 bis 9, wobei die Schaltungsanordnung CCD-Ansteuerungssignale ($T_L$) mit linearen Flanken erzeugt.

**Claims**

1.  A TDI line sensor (1), wherein the TDI line sensor (1) has n TDI lines (2.1-2.n), at least one readout electronics unit (3) and a circuit arrangement (4) for generating CCD control signals ($T_L$) for the TDI lines (2.1-2.n), wherein the period of the CCD control signals ($T_L$) is an integer multiple of a system period ($T_S$), wherein all TDI lines (2.1-2.n) are controlled with the same CCD control signal ($T_L$),
    **characterised in that**
    the TDI line sensor (1) is configured such that an optimum period of the CCD control signals ($T_L$) is calculated on the basis of the relative velocity (V), wherein the optimum period is not an integer multiple of the system period, wherein the period of the CCD control signals ($T_L$) is changed as an integer multiple of the system period ($T_S$) during the integration over all n TDI lines (2.1-2.n) so that the arithmetic mean of the period of the CCD control signals ($T_L$) over the n integration steps corresponds to the optimum period, wherein the change in the period of the CCD control signals over the n integration steps is limited to one system period ($T_S$).

2.  The TDI line sensor (1) according to claim 1, wherein the TDI line sensor (1) is configured so as to calculate a period pattern over x integration steps, wherein the arithmetic mean value over the x integration steps corresponds to the optimum period, wherein the period pattern is applied repeatedly over the n integration steps.

3.  The TDI line sensor (1) according to claim 1 or 2, wherein the circuit arrangement (4) is configured so as to additionally change an edge steepness of the CCD control signals ($T_L$), wherein the edge steepness is reduced as the period of the CCD control signals ($T_L$) increases.

4.  The TDI line sensor (1) according to any one of the preceding claims, wherein the circuit arrangement (4) is configured so as to generate CCD control signals ($T_L$) with linear edges.

5.  The TDI line sensor (1) according to any one of the preceding claims, wherein the circuit arrangement (4) is configured as an FPGA or as an ASIC.

6.  The TDI line sensor (1) according to any one of the preceding claims, wherein a digital-to-analogue converter (6) is arranged at the output of the circuit arrangement (4).

7.  A method for operating a TDI line sensor (1), wherein the TDI line sensor (1) has n TDI lines (2.1-2.n), at least one readout electronics unit (3) and a circuit arrangement (4) for generating CCD control signals ($T_L$) for the TDI lines (2.1-2.n), wherein the period of the CCD control signals ($T_L$) is an integer multiple of a system period ($T_S$), wherein all TDI lines (2.1-2.n) are controlled with the same CCD control signal ($T_L$), **characterised in that** the TDI line sensor (1) calculates an optimum period of the CCD control signals ($T_L$) on the basis of the relative velocity (V), wherein the optimum period is not an integer multiple of the system period ($T_S$), wherein the period of the CCD control signals ($T_L$) is changed as an integer multiple of the system period ($T_S$) during the integration over all n TDI lines (2.1-2.n) so that the arithmetic mean of the period of the CCD control signals over the n integration steps corresponds to the optimum period, wherein the change in the period of the CCD control signals over the n integration steps is limited to one system period ($T_S$).

8. The method according to claim 7, wherein the TDI line sensor (1) calculates a period pattern over x integration steps, wherein the arithmetic mean value over the x integration steps corresponds to the optimum period, wherein the period pattern is applied repeatedly over the n integration steps.

9. The method according to claim 7 or 8, wherein, in addition, the circuit arrangement (4) changes an edge steepness of the CCD control signals ($T_L$), wherein the edge steepness is reduced as the period of the CCD control signals ($T_L$) increases.

10. The method according to any one of claims 7 to 9, wherein the circuit arrangement generates CCD control signals ($T_L$) with linear edges.

**Revendications**

1. Capteur linéaire TDI (1), dans lequel le capteur linéaire TDI (1) a n lignes TDI (2.1-2.n), au moins une unité électronique de lecture (3) et un agencement de circuit (4) pour générer des signaux de commande CCD ($T_L$) pour les lignes TDI (2.1-2.n), dans lequel la période des signaux de commande CCD ($T_L$) est un multiple entier d'une période de système ($T_S$), dans lequel toutes les lignes TDI (2.1-2.n) sont commandées par le même signal de commande CCD ($T_L$),
**caractérisé en ce que**
le capteur linéaire TDI (1) est configuré de telle sorte qu'une période optimale des signaux de commande CCD ($T_L$) est calculée sur la base de la vitesse relative (V), dans lequel la période optimale n'est pas un multiple entier de la période du système, dans lequel la période des signaux de commande CCD ($T_L$) est modifiée en tant que multiple entier de la période du système ($T_S$) pendant l'intégration sur l'ensemble des n lignes TDI (2.1-2.n) de telle sorte que la moyenne arithmétique de la période des signaux de commande CCD ($T_L$) sur les n étapes d'intégration correspond à la période optimale, dans lequel la modification dans la période des signaux de commande CCD sur les n étapes d'intégration est limitée à une période de système ($T_S$).

2. Capteur linéaire TDI (1) selon la revendication 1, dans lequel le capteur linéaire TDI (1) est configuré de manière à calculer un motif périodique sur x étapes d'intégration, dans lequel la valeur de la moyenne arithmétique sur les x étapes d'intégration correspond à la période optimale, dans lequel le motif de période est appliqué de manière répétée sur les n étapes d'intégration.

3. Capteur linéaire TDI (1) selon la revendication 1 ou 2, dans lequel l'agencement de circuit (4) est configuré de manière à modifier de plus une inclinaison de bord des signaux de commande CCD ($T_L$), dans lequel l'inclinaison de bord est réduite à mesure que la période des signaux de commande CCD($T_L$) augmente.

4. Capteur linéaire TDI (1) selon l'une quelconque des revendications précédentes, dans lequel l'agencement de circuit (4) est configuré de manière à générer des signaux de commande CCD ($T_L$) avec des bords linéaires.

5. Capteur linéaire TDI (1) selon l'une quelconque des revendications précédentes, dans lequel l'agencement de circuit (4) est configuré sous forme de FPGA ou d'ASIC.

6. Capteur linéaire TDI (1) selon l'une quelconque des revendications précédentes, dans lequel un convertisseur numérique/analogique (6) est agencé au niveau de la sortie de l'agencement de circuit (4).

7. Procédé de fonctionnement d'un capteur linéaire TDI (1), dans lequel le capteur linéaire TDI (1) a n lignes TDI (2.1-2.n), au moins une unité électronique de lecture (3) et un agencement de circuit (4) pour générer des signaux de commande CCD ($T_L$) pour les lignes TDI (2.1-2.n), dans lequel la période des signaux de commande CCD ($T_L$) est un multiple entier d'une période de système ($T_S$), dans lequel toutes les lignes TDI (2.1-2.n) sont commandées par le même signal de commande CCD ($T_L$),

**caractérisé en ce que**

le capteur linéaire TDI (1) calcule une période optimale des signaux de commande CCD ($T_L$) sur la base de la vitesse relative (V), dans lequel la période optimale n'est pas un multiple entier de la période du système ($T_S$), dans lequel la période des signaux de commande CCD ($T_L$) est modifiée en tant que multiple entier de la période du système ($T_S$) pendant l'intégration sur l'ensemble des n lignes TDI (2.1-2.n) de telle sorte que la moyenne arithmétique de la période des signaux de commande CCD sur les n étapes d'intégration correspond à la période optimale, dans lequel la modification dans la période des signaux de commande CCD sur les n étapes d'intégration est limitée à une période de système ($T_S$).

8. Procédé selon la revendication 7, dans lequel le capteur linéaire TDI (1) calcule un motif périodique sur x étapes d'intégration, dans lequel la valeur de la moyenne arithmétique sur les x étapes d'intégration correspond à la période optimale, dans lequel le motif de période est appliqué de manière répétée sur les n étapes d'intégration.

9. Procédé selon la revendication 7 ou 8, dans lequel, de plus, l'agencement de circuit (4) modifie une inclinaison de bord des signaux de commande CCD ($T_L$), dans lequel l'inclinaison de bord est réduite à mesure que la période des signaux de commande CCD($T_L$) augmente.

10. Procédé selon l'une quelconque des revendications 7 à 9, dans lequel l'agencement de circuit génère des signaux de commande CCD ($T_L$) avec des bords linéaires.

Fig. 1

EP 4 356 602 B1

Fig. 2a

Fig. 2b

EP 4 356 602 B1

Fig. 3a

Fig. 3b

EP 4 356 602 B1

Fig. 4

Fig. 5

EP 4 356 602 B1

Fig. 6

4

V/R

$T, O_x, O_y, G_y, E_x$

$T_S$

5

6

$T_L$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007064135 A1